# EUROPEAN PATENT SPECIFICATION

(11) **EP 2 692 175 B1**
(45) Date of publication and mention of the grant of the patent: **03.05.2017**
(21) Application number: 11716822.9
(22) Date of filing: 31.03.2011
(51) Int. Cl.: H04W 40/28, H04L 12/24

(54) **METHOD AND SYSTEM FOR MANAGING ENERGY CONSUMPTION OF AN ENTERPRISE WIRELESS ACCESS NETWORK**
VERFAHREN UND SYSTEM ZUR VERWALTUNG DES ENERGIEVERBRAUCHS EINES DRAHTLOSEN UNTERNEHMENSZUGANGSNETZWERKES
PROCÉDÉ ET SYSTÈME PERMETTANT DE GÉRER LA CONSOMMATION D'ÉNERGIE D'UN RÉSEAU D'ACCÈS SANS FIL D'ENTREPRISE

(43) Date of publication of application: 05.02.2014
(73) Proprietor: NEC Corporation, Tokyo 108-8001 (JP)
(72) Inventor: SAMDANIS, Konstantinos, 69221 Dossenheim (DE); SCHOELLER, Marcus, 76709 Kronau (DE)
(74) Representative: Patent- und Rechtsanwälte Ullrich & Naumann
(86) International application number: PCT/EP2011/001638
(87) International publication number: WO 2012/130262

(56) References cited:
- AMIT P JARDOSH ET AL: "Green WLANs: On-Demand WLAN Infrastructures", MOBILE NETWORKS AND APPLICATIONS, KLUWER ACADEMIC PUBLISHERS, BO, vol. 14, no. 6, 9 December 2008 (2008-12-09), pages 798-814, XP019752206, ISSN: 1572-8153

## Description

The present invention relates to a method and system for managing energy consumption of an enterprise wireless access network, wherein said network includes a plurality of wireless access nodes that are distributed within said enterprise building and wherein said wireless access nodes, each within a certain coverage area, provide network access to users.

Energy efficiency is an important issue that plays a key role in designing and operating modern network architectures, and it comprises a fundamental topic of interest with roots in ad hoc networks. Early works in this field include the article of C.E. Jones, K. M. Sivalingam, P. Argrawal, and J.C. Chen, "A survey of energy efficient network topologies for wireless networks," Wireless Networks, Vol.7, No.4, pp. 343-358, August 2001.

In the context of wireless mesh networks, which today have several applications in metropolitan area, broadband home networking as well as enterprise networks and building automation, two main areas of interest have been identified, which include radio specific issues (e.g. collision avoidance control, transmission avoidance when poor channel conditions are experienced, intelligent scheduling including data aggregation and coding selection techniques, varying transmission power) and routing specific issues (e.g. finding an energy efficient path to minimize the overall energy expenditure of the system, or selecting paths to increase the life of each mesh node assuming that they are self-powered entities). An energy saving issue of the above mentioned kind is described in detail, e.g., in United States patent application publication US 2010/0157827 A1.

In the context of green wireless LANs the main proposals concentrate on Resource on Demand usage, which aims to match the offered capacity to the traffic demand. Existing methods, described for instance in A.P. Jardosh, et al., "Green WLANs: On-demand WLAN Infrastructures", Kluwer Academic Publishers, BO, vol. 14, no. 6, 9 December 2008, pages 798-814, consider also clustering concepts, where certain algorithms specify WLAN access points to compensate in terms of coverage on behalf of other access points, which could be powered-off for energy saving purposes. The main requirements of this approach include that the coverage of the WLAN network should remain constant and the offered QoS should not be reduced, but maintained constant. Furthermore, energy saving states should be stable, i.e. oscillations or power on-off devices frequently should be avoided.

In I. Ashraf, L.T.W. Ho, H. Claussen, "Improving Energy Efficiency of Femtocell Base Stations via User Activity Detection", IEEE WCNC, Sidney, April 2010, a user activity related proposal for energy efficient femtocell usage is presented, where the user activity in relation with femto-macro cell methods is used to power off and re-power on specific femtocells. The main idea is that a femtocell or more general a wireless access node enters a power saving mode once there is no traffic for a specific time period and once a nearby user initializes a connection he first uses the macro-cell network while at the same time the femtocell detects such activity and re-powers on. Once the femtocell is re-powered on the user is handed over. However, this approach is rather static, and it only works in connection with the deployment of a macrocell network.

It is therefore an object of the present invention to improve and further develop a method and a system for managing energy consumption of a wireless enterprise network of the initially describe type in such a way that the energy efficiency of the network is improved in a way that can be flexibly adapted to various situations and in which the overall network performance is almost not affected.

In accordance with the invention, the aforementioned object is accomplished by a method comprising the features of claim 1. According to this claim, such a method comprises the steps of
revealing the identity of users within said building to a management entity,
collecting user specific context information based on the users' identity, wherein said user specific context information includes information about monitored user activity in form of user specific load activity profiles, information about monitored user mobility within said building in form of user specific mobility profiles including arrival and/or leaving times, and information about which office belongs to a user, which areas of said building a user has access to, and/or which areas of said building a user visits frequently,
for each user, based on said user's specific context information, selecting a set of wireless access nodes from said plurality of wireless access nodes that are capable of satisfying said user's traffic demands, and
powering on the wireless access nodes of said selected set of wireless access nodes.

Furthermore, the aforementioned object is accomplished by a system comprising the features of claim 12. According to this claim, such a system comprises
a management entity,
means for revealing the identity of users within said building to said management entity, and
a database that, based on the users' identity, provides user specific context information, wherein said user specific context information includes information about monitored user activity in form of user specific load activity profiles, information about monitored user mobility within said building in form of user specific mobility profiles including arrival and/or leaving times, and information about which office belongs to a user, which areas of said building a user has access to, and/or which areas of said building a user visits frequently,
wherein said management entity is configured to select for each user, based on said user's specific context information, a set of wireless access nodes from said plurality of wireless access nodes that are capable of satisfying said user's traffic demands, and to power on the wireless access nodes of said selected set of wireless access nodes.

According to the invention it has been recognized that the energy efficiency of wireless enterprise networks can be optimized by taking advantage of user specific context information for controlling the power management of the wireless access nodes distributed within a building where the enterprise network is deployed. By implementing a management entity that, based on the users' identity, considers such user specific context information, a high flexibility is achieved on powering on and/or off certain wireless access nodes of the network to serve the imposed load demands.

According to the invention, in order to give the management entity a sufficiently broad basis for its decision procedure regarding the powering on/off of certain wireless access nodes, the user specific context information includes information about which office belongs to a user, which areas of the building a user has access to, and/or which areas of the building a user visits frequently. Furthermore, the user specific context information includes information about monitored user activity in form of user specific load activity profiles as well as information about monitored user mobility within the building in form of user specific mobility profiles including arrival and/or leaving times.

In contrast to approaches for energy efficiency improvement in green wireless LANs, the method according to the present invention does not ensure constant coverage, since this is not a major issue. In fact, the present invention assumes that the enterprise network initiates from a sleeping mode with the majority of the wireless access nodes in standby mode. Then, as more users enter the building the correspondent set of wireless access nodes is powered on to serve them.

It is to be noted that in the context of the present invention the term "enterprise" is to be understood in a broad sense and is not intended to limit the invention in any way. In particular, the term "wireless enterprise network" includes all kinds of wireless access networks to which a specific group of users, e.g. employees in an office building, workers in a factory building, etc., has access to.

According to a preferred embodiment the identity of a user may be revealed to the management entity by means of authenticating the user's mobile terminal. This can be done, for instance, when a user enters the building in connection with a regular 3GPP procedure that initiates a handover from the macro network outside the building to the enterprise's wireless access network within the building. To this end, a wireless access node, which is always powered on, may be deployed in the entrance area of the building. In case that the building has more than one entrance, such always powered on wireless access node may be deployed at each of the entrances to cover the entire building. From these always powered on wireless access nodes the information regarding the users' identities may be transmitted directly to the management entity.

With respect to providing the management entity the user specific context information it may be provided that the management entity, based on the revealed identity information, queries an external information source, e.g. a physical access control system of the building, to get the context for this user.

Based on the user context information, it may be provided that the management entity queries another external information source, e.g. a building inventory system, to get a list of wireless access node or femtocell identifiers (preferably together with the respective power states of these femtocells), which are located in the respective areas a user has access to. Form such a list, the management entity may derive a set to wireless access nodes or femtocells which can provide continuous connectivity to the user as he moves through the building, while satisfying the user's traffic demand.

Advantageously, the management entity, based on the user specific context information, predicts movements of a user. According to a preferred embodiment it may be provided that all wireless access nodes along a predicted user path are selected to be powered on. For instance, when an employee enters the building, the wireless access nodes located within his office together with all wireless access nodes located along a path from the entrance to his office may be powered on in order to provide continuous connectivity to the employee.

However, according to a further preferred embodiment, once the movement or direction of a user, e.g. to his working place, is determined and the involved wireless access nodes are identified, the management entity may execute an optimization process to minimize the number of wireless access nodes being actually empowered. To this end the management entity may have access to information regarding the actual transmission area of the individual wireless access nodes. For instance, based on such information the management entity may remove all initially selected wireless access nodes, which do not contribute in terms of coverage to the predicted user movement/direction.

To further enhance adaptability, it may be provided that the management entity analyses historic information for establishing correlations between different users. For instance, the management entity may establish correlations by analyzing which users come to work together, or at nearly similar times.

A further refinement of the management entity may take additional external data into consideration to decrease the power consumption further, in particular information obtained by analyzing a user's electronic calendar. To this end the management entity may be connected with the electronic calendars of the users. For example, if employee A and B have a joint meeting in the near future, indicated in their respective calendars, the likelihood that employee B arrives shortly after employee A is high. As a consequence, a wireless access node that may serve both employee B and employee A is powered on, instead of powering on wireless access node that could only serve employee A.

Taking into consideration the fact that deviations of directions and user behavior might occur, the management entity may identify a set of neighbor femtocells around the powered-on ones, which keeps in a state of being easily and rapidly powered-on. In this way the energy management entity may tolerate deviations that may use to build a more accurate user context.

In order to further enhance the energy efficiency of the network, the management entity may be provided with information regarding the power consumption characteristic of wireless access nodes. Based on such information the management entity can compute the total energy consumption for different configurations and apply the configuration that is more cost efficient in terms of power consumption.

Furthermore, as the operations required bringing a wireless access node from a power saving state into full operational mode vary, the respective information may be provided to the management entity in order to accommodate this constraint. In general, the energy conservation is higher as more subsystems are powered down, but bringing more subsystems into operational mode again requires more time. The time needed for a specific wireless access node to come back to full operation from different power saving states is system dependent.

Advantageously, when all users have left the enterprise building all wireless access nodes are put into a power saving mode, except for the wireless access node(s) located in the entrance area(s) of the building.

An exception to the procedure described above may be made in an emergency situation. In such case it may be provided that all wireless access nodes are immediately turned on to guarantee ubiquitous connectivity.

The method according to the present invention may be applied in connection with many different kinds of wireless network technologies, among them in particular 3G, LTE, WiFi or WiMAX. In a 3G or LTE, LTE-A environment the wireless access nodes would be, e.g., femtocell base stations deployed throughout the enterprise. In other environments wireless access nodes would include respective kinds of wireless access points, for instance Wi-Fi access points.

There are several ways how to design and further develop the teaching of the present invention in an advantageous way. To this end, it is to be referred to the patent claims subordinate to independent patent claims 1 and 12 on the one hand, and to the following explanation of a preferred example of an embodiment of the invention illustrated by the drawing on the other hand. In connection with the explanation of the preferred example of an embodiment of the invention by the aid of the drawing, generally preferred embodiments and further developments of the teaching will be explained. In the drawings
- Fig. 1: is a schematic view of an enterprise's wireless access network illustrating a first application scenario of a method according to the present invention with empowering femtocells,
- Fig. 2: is a schematic view of the enterprise's wireless access network of Fig. 1 illustrating a second application scenario of a method according to the present invention with refined power management,
- Fig. 3: is a schematic view of the enterprise's wireless access network of Fig. 1 illustrating a third application scenario of a method according to the present invention with a single femtocell simultaneously serving more than one user,
- Fig. 4: is a schematic view of the enterprise's wireless access network of Fig. 1 illustrating a fourth application scenario of a method according to the present invention utilizing a femtocell's output power adaptation capabilities,
- Fig.5: is a flow diagram giving an overview of an energy management algorithm for powering on cells in accordance with the present invention,
- Fig. 6: is a flow diagram giving an overview of a process to specify whether another set of femtocells may be able to accommodate all current users including the new incoming ones in accordance with the present invention, and
- Fig.7: is a flow diagram giving an overview of an energy management algorithm for powering off femtocells in accordance with the present invention.

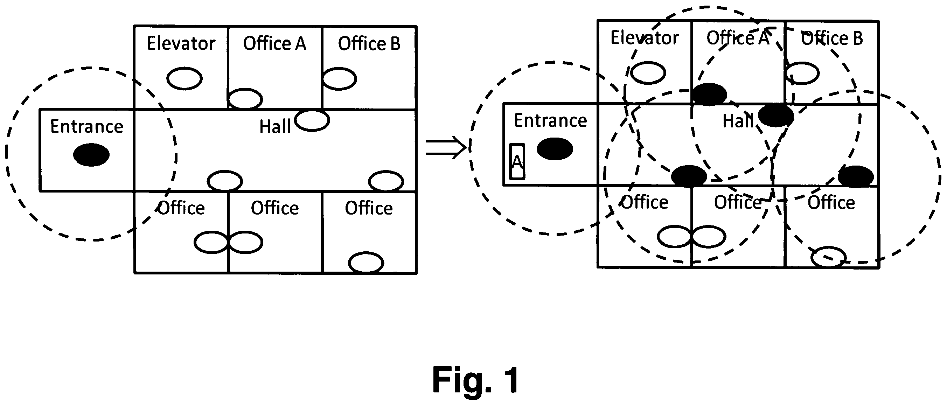

The present invention concentrates on the problem of energy efficiency in wireless networks, in particular in enterprise wireless networks, to which the embodiments described hereinafter in connection with Figs. 1-4 refer. As will be described in detail below, a main advancement of the present invention is the minimization of energy based on *identification* of the user entering/leaving a building and a prediction on his way through the building. In a second step, this identity information is combined with other data sources, such as physical access control to parts of the building and presence of other users already within the building, to minimize the energy footprint of the overall system while assuring continuous connectivity with sufficient bandwidth. Moreover, prediction of the user's future movement is added because network nodes, such as femtocells or WiFi access points, cannot be turned on as quickly as light bulbs. Correct prediction allows to start the boot up of the network nodes early enough, to be in full operational mode when the user comes into communication range.

The embodiments of Figs. 1-4 consider a building where Internet connectivity is required only at specific times, as employees or in general users enter or leave the network progressively. The objective is to take advantage of the user specific information like the location of his working area combined with user application demands and user mobility and user history or daily calendar data to determine a set of network nodes to provide network access, especially continuous connectivity and sufficient bandwidth for mobile users. In addition, this individual information gets correlated across all employees to minimize the energy consumption of the overall network. A main assumption is that wireless access nodes located in various places inside a building may create overlapping areas, which can serve multiple users in their vicinity. A management entity minimizes the energy consumption of the enterprise network by controlling the power mode of each wireless access node within the enterprise based on the camping users load activity and mobility within the building and on the network requirements.

The embodiments illustrated in Figs. 1-4 are related to the same building which includes an entrance, a hall, an elevator as well as five offices that are accessible via the hall. The following description can be easily adapted to a more complex building with several entrances and several floors, as will be apparent to a skilled person. In the building of Figs. 1-4, a plurality of femtocell base stations is deployed as wireless access nodes. Specifically, in each of the entrance, the elevator and the offices a femtocell is deployed. Additionally, three femtocells are deployed in the hall. The femtocell base stations are indicated by the elliptic symbols, wherein the filled symbols indicate that the femtocell is powered on, whereas the unfilled symbols indicate that the femtocell is currently operated in a standby low power mode.

In Fig. 1, when the first employee is entering the building, a regular 3GPP procedure initiates a handover from the macro network outside the building to the enterprise wireless access network within the building. During this process, the user terminal is authenticated revealing its identity to the network. Based on this identity information the management entity queries first an external information source, e.g., the physical access control system of the building, to get the context for this user. The user context contains information about the areas this employee has access to, i.e. in which office his desk is, and how he can get there and what other common areas he has access to and visits regularly. Based on this user context information, the management entity, queries another external information source, e.g., the building inventory system to get a list of wireless access nodes or femtocell identifiers which are located in the respective areas this employee has access to and the respective power states of these femtocells. Form such a list, the management entity derives a set of femtocells which can provide continuous connectivity to the user as he moves through the building, while satisfying the user's traffic demand.

For example, when employee A whose office is Office A comes into the building as depicted in Fig. 1, the management entity can select to empower all femtocells located in the hall and the one femtocell located in Office A. When employee B comes into the building later, the management system only empowers the femtocell in Office B (not depicted).

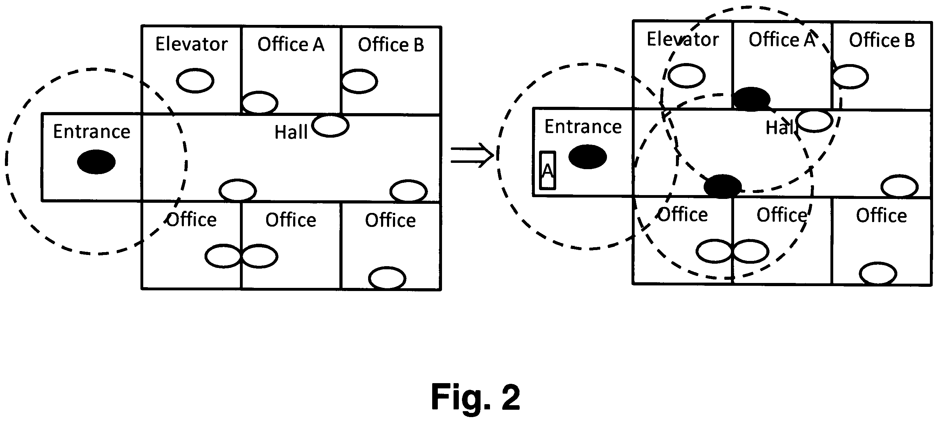

A refinement of this management system is depicted in Fig. 2. Once the direction of the user to his working place is determined and the involved femtocells are enlisted, the power management entity executes an optimization process to minimize the number of empowered femtocells. Employing self-organization methods, for instance the ones described in K. Samdanis, D. Kutscher, M. Brunner, "Self-organized energy efficient cellular networks", IEEE PIMRC, Istanbul, September 2010, the system may have access to information regarding the actual transmission area of the individual femtocells. Based on such information it may remove all initially enlisted femtocells, which do not contribute in terms of coverage to the predicted user direction. In Fig. 2, these are the two right nodes in the hall. When user B comes into the building later, the management system only powers on the femtocell in Office B (not depicted).

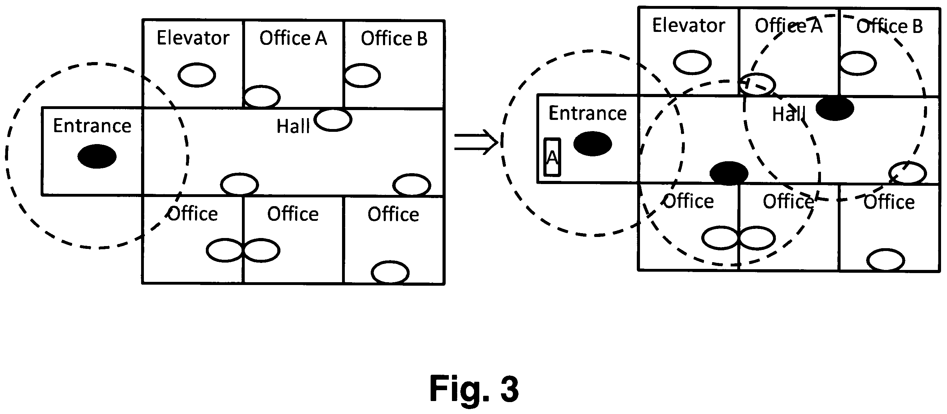

A further refinement of the management system takes additional external data into consideration to decrease the power consumption further. For example, if employee A and B have a joint meeting in the near future, indicated in their respective calendars, the likelihood that employee B arrives shortly after employee A is high. Similar correlations can be found by analyzing historic information, i.e., which users come to work together, or at nearly similar times. This allows for configurations as depicted in Fig. 3, where a femtocell at the end of the path is selected to provide connectivity to more than a single user.

Correlating the arrival time of the user with his calendar provides the additional benefit of predicting deviations of the user's daily routine. If the user enters the building briefly before his first scheduled meeting in a conference room, the path prediction function can map the way to this conference room in addition to the path to the user's office. Thereby, continuous connectivity can be provided on either path the user takes.

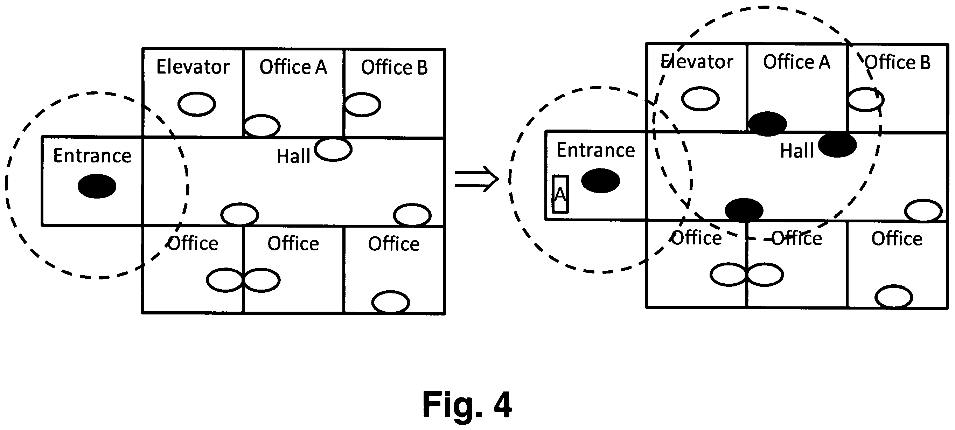

Fig. 4 shows another preferred embodiment where the configuration of the femtocell network requires the capability of the femtocell to change its output power to increase its transmission area. The management entity is expected to have prior information regarding the power consumption of a femtocell using different power settings. Based on such information the management entity can compute the total energy consumption for different configurations and apply the configuration that is more cost efficient in terms of power consumption.

Another preferred embodiment connects the network management system with the electronic calendar of the individual users. This allows the management entity to retrieve even more detailed information regarding the femtocells to empower, e.g., the user has scheduled a meeting with some colleagues in a meeting room.

The additional information which employees will be in a specific location for some time can be used to power down the femtocells in the respective offices and to empower the femtocell in the meeting room.

Yet another preferred embodiment considers the case where each office is covered by several nearby femtocells. In such a case, a more intelligent solution is needed to identify a femtocell that may serve an initial user and potential future entering users by examining history and/or electronic calendar information. In this way, the femtocell network would progressively be powered-on using as less femtocells as possible minimizing the energy consumption. Once more users enter the network and the resource consumption increases, more femtocells would be powered-on.

The objective of selecting a certain cell to power-on is to serve the traffic demand with minimum powered-on cells. Such selection should be stable enough to avoid frequent re-association of users with femtocells and minimize the amount of handovers. For this reason, examining the history and electronic calendar information in combination with a load activity profile is important. In summary, by blending such external information with the conventional constraints of load activity, mobility and coverage we can design a powerful tool for optimizing the energy consumption of an enterprise wireless access network.

The proposed algorithm described in connection with Figs. 1-4 is centralized with prior access to information regarding
- enterprise network: location and coverage compensation of each network node
- monitoring methods of user activity
- information regarding arriving users
- additional user specific data sources (electronic calendars)
- history information

It is worth noting that the history information is referred to record that are kept by the management entity regarding the arrival or leaving times of each user, his load activity, mobility inside the building.

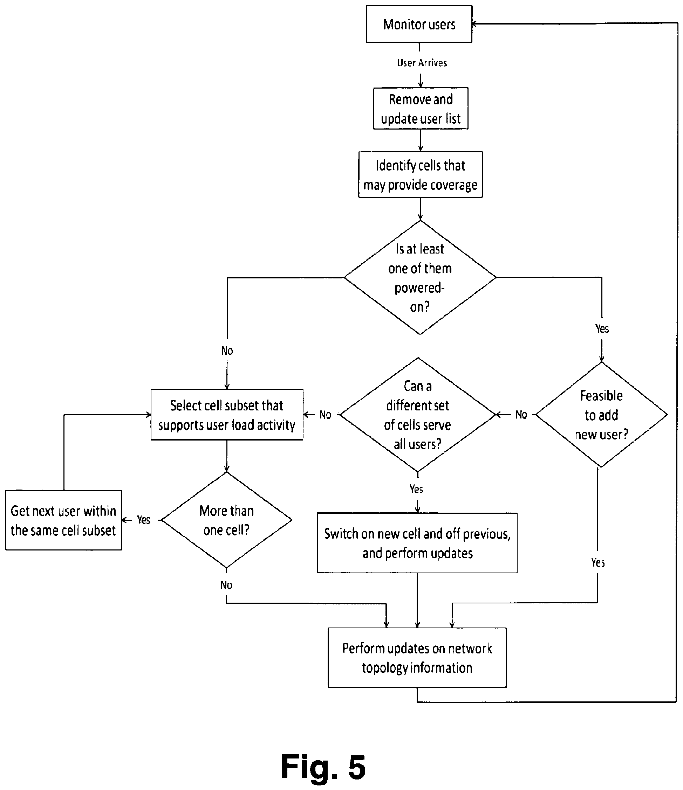

Hereinafter, referring to Fig. 5, a rather sophisticated embodiment of a method according to the present invention is considered, in which certain locations are covered by several wireless access nodes at the same time and the management entity is equipped with history information about user activity and arriving/leaving patterns. Other embodiments of the present invention would follow the same method excluding the process and information in relation with user arriving/leaving history or user traffic activity patterns.

The management entity is expected to monitor the user's arriving or leaving patterns and accordingly perform the energy management of the femtocell enterprise network. The purpose of monitoring arriving and leaving users is to enable the energy algorithm to select optimal femtocells to power on and off introducing minimal energy saving state alternations, i.e. re-powering on/off femtocells, and in this way it also increases the stability of the operating femtocell network.

To elaborate this principle, an office is considered where the arrival pattern of certain users would require the management entity to power-on a specific sequence of femtocells, i.e. knowing that user A and user B are entering the enterprise network in a close time proximity the system would select a certain femtocell to power on to serve both users, which might be different from the case when user A and user C are entering the building. For this reason it is important to maintain a list of users arriving in the network based additionally on history and electronic calendar information. Such list is sorted with respect to arrival time of each individual user, while in addition for each individual user further information is maintained regarding the cells that may be used to provide him adequate coverage.

Therefore, if each user may be served by many potential cells then choosing the one that may serve also the next arriving user could also save overhead related with performing further network energy arrangement changes. An overview of the energy management process, for arriving users that enter the enterprise network is illustrated in Fig. 5.

When a user enters the building, he is removed from the arriving list, which is also updated. The management entity then identifies based on given information the set of cells that may serve the user in terms of coverage and examines whether any of these cells are powered-on already. In case none of the identified cells is powered-on, the management entity examines the user load activity to determine the optimal cell to power-on. If more than one cell can support that particular user, the next forthcoming user within the same set of cells is also considered, until only one cell is specified that may support the user that arrived and the maximum set of forthcoming users.

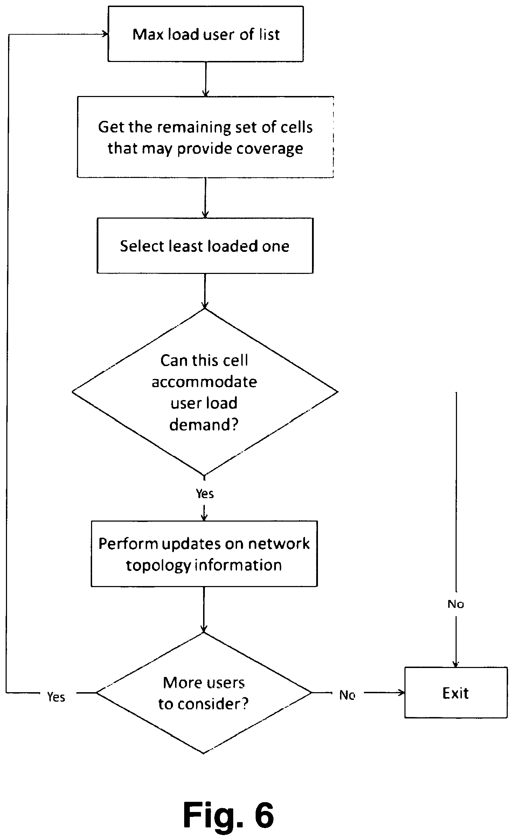

The reason is the support of forthcoming users limits the need of operating additional cells that consume more energy, while at the same time it ensures stability limiting the handover of users from a certain cell to another. In case a cell from the selected set is already powered-on, the system checks whether it is feasible to support the new user and in a positive case it performs the corresponding updates. Otherwise, it needs to examine whether powering on another cell instead may serve all current users including the entering user. An overview of such search process is illustrated in Fig. 6.

To examine whether powering on another cell instead may serve all current users including the entering user, the current users that camp at cells within the coverage range of the new user are examined to identify the potential of being shifted to another common cell to all users that could accommodate their load demand. If a common cell does not exist, the system abandons the process. Otherwise, the maximum load user is first selected with the management entity identifying the set of cells that may provide coverage to such user and at the same time may provide coverage to all other affected users. From that set of cells the management entity selects the least loaded one.

If the selected cell can accommodate the first user, the next user is considered until all users are examined. In case a user cannot be accommodated by the selected cell, the process is terminated. Otherwise, at the end of the process the system switches on the selected cell and instructs the affected users to perform a handover, instructing the previous cell to power-off. In case none other cell is identified, the management entity need to select a new cell to power-on using the same process as in the case of an incoming user with none cells being powered-on.

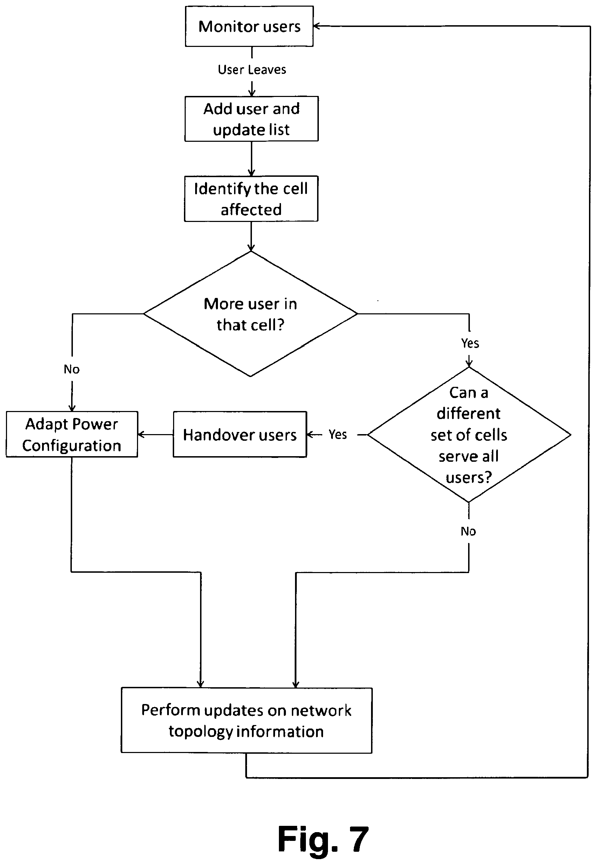

When a user leaves the network, the system adds the user to the list and performs the list history related updates, before identifying the cell affected from the user absence. An overview of the energy saving management process for the case of a user leaving the network is illustrated in Fig. 7. In particular, when a user leaves the enterprise network, the management entity checks whether more users are camping in that particular cell, and in a negative case it simply switches off such cell and performs the appropriate updates.

Otherwise, it examines whether an alternative already powered-on set of cells can accommodate the remaining users in order to hand them over and power-off the previously operating cell. In case of a positive case the management entity instructs a handover procedure before adapting the power configuration of the affected cell and performing the appropriate updates else, it just performs the appropriate load related updates without powering off any cells and continues to monitor the network. The process of identifying the appropriate set of powered-on cells that may accommodate the existing users is similar to the process described in connection with the embodiment of Fig. 6.

It should be noted that, in case the power configuration of a femtocell is adapted, the management entity checks whether such cell is within a geographical range where users may need it back in operation again in case they deviate from their common directions and behavior. Based on such assessment, the management entity either switches off the selected cells completely or maintains them within an easily powered back state.

The proposed method blends both arriving and leaving cases with the ultimate objective to provide a stable solution that minimizes energy consumption for enterprise networks.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for managing energy consumption of an enterprise wireless access network,
wherein said network includes a plurality of wireless access nodes that are distributed within said enterprise's building and wherein said wireless access nodes, each within a certain coverage area, provide network access to users, the method comprising the steps of
revealing the identity of users within said building to a management entity,
collecting user specific context information based on the users' identity, wherein said user specific context information includes information about monitored user activity in form of user specific load activity profiles, information about monitored user mobility within said building in form of user specific mobility profiles including arrival and/or leaving times, and information about which office belongs to a user, which areas of said building a user has access to, and/or which areas of said building a user visits frequently,
for each user, based on said user's specific context information, selecting a set of wireless access nodes from said plurality of wireless access nodes that are capable of satisfying said user's traffic demands, and
powering on the wireless access nodes of said selected set of wireless access nodes.

2. Method according to claim 1, wherein the identity of a user is revealed to said management entity by means of authenticating the user's mobile terminal, in particular when the user enters said building.

3. Method according to claim 1 or 2, wherein said management entity, based on said user specific context information, predicts movements of a user.

4. Method according to claim 3, wherein all wireless access nodes along a predicted user path are selected to be powered on.

5. Method according to claim 3 or 4,wherein said management entity executes an optimization process to minimize the number of empowered wireless access nodes by not powering on wireless access nodes that do not contribute in terms of coverage to said predicted user path.

6. Method according to any of claims 1 to 5, wherein said management entity analyses historic information for establishing correlations between different users.

7. Method according to any of claims 1 to 6, wherein user specific context information is enriched with information obtained by analyzing a user's electronic calendar.

8. Method according to any of claims 1 to 7, wherein said management entity identifies wireless access nodes that are neighbored to wireless access nodes of said selected set of wireless access nodes and keeps those identified wireless access nodes in a state that allows for rapid power on.

9. Method according to any of claims 1 to 8, wherein information regarding the power consumption of said wireless access nodes using different output power settings is provided to said management entity,
wherein said management entity may compute the total energy consumption of different configurations and may apply the configuration that is more cost efficient in terms of power consumption.

10. Method according to any of claims 1 to 9, wherein information regarding the operations required bringing a wireless access node from a power saving state into full operational mode is provided to said management entity.

11. Method according to any of claims 1 to 10, wherein, when all users have left said enterprise building, all said wireless access nodes are put into a power saving mode, except for one wireless access node located in the entrance area of said building, and/or
wherein all said wireless access nodes are put into a powered-on mode in case any of said users within said enterprise building initiates an emergency call or enters the building with an active emergency call ongoing.

12. System for managing energy consumption of an enterprise wireless access network, in particular for executing a method according to any of claims 1 to 11,
wherein said network includes a plurality of wireless access nodes that are distributed within said enterprise's building and wherein said wireless access nodes, each within a certain coverage area, provide network access to users, said system comprising:
a management entity,
means for revealing the identity of users within said building to said management entity, and
a database that, based on the users' identity, provides user specific context information, wherein said user specific context information includes information about monitored user activity in form of user specific load activity profiles, information about monitored user mobility within said building in form of user specific mobility profiles including arrival and/or leaving times, and information about which office belongs to a user, which areas of said building a user has access to, and/or which areas of said building a user visits frequently,
wherein said management entity is configured to select for each user, based on said user's specific context information, a set of wireless access nodes from said plurality of wireless access nodes that are capable of satisfying said user's traffic demands, and to power on the wireless access nodes of said selected set of wireless access nodes.

13. System according to claim 12, including a physical access control member for providing to said management entity user specific context information.

14. System according to claim 12 or 13, including a building inventory member for providing to said management entity information regarding the deployment and/or availability of wireless access nodes within said building, preferably together with information about the specific characteristics of said wireless access nodes.

15. System according to any of claims 12 to 14, wherein said management entity is connected with the electronic calendars of the users, and/or
wherein said network employs as wireless network technology 3G, LTE, LTE-A, WiFi or WiMAX, and/or
wherein said wireless access nodes include femtocell base stations.

## Patentansprüche

1. Verfahren zur Verwaltung des Energieverbrauchs eines drahtlosen Unternehmenszugangsnetzwerks,
wobei das Netzwerk eine Vielzahl von drahtlosen Zugangsknoten umfasst, die innerhalb des Unternehmensgebäudes verteilt sind, und wobei die drahtlosen Zugangsknoten, jeweils innerhalb eines bestimmten Abdeckungsbereichs, Nutzern Netzwerkzugang bereitstellen,
wobei das Verfahren die folgenden Schritte umfasst:
Offenbaren der Identität von Nutzern innerhalb des Gebäudes an eine Verwaltungseinheit,
Sammeln von nutzerspezifischen Kontextinformationen basierend auf der Identität der Nutzer, wobei die nutzerspezifischen Kontextinformationen Informationen über beobachtete Nutzeraktivität in Form von nutzerspezifischen Lastaktivitätsprofilen, Informationen über beobachtete Nutzermobilität innerhalb des Gebäudes in Form von nutzerspezifischen Mobilitätsprofilen einschließlich Ankommens- und/oder Gehens-Zeiten, und Informationen darüber, welches Büro zu einem Nutzer gehört, zu welchen Gebäudebereichen ein Nutzer Zugang hat, und/oder welche Gebäudebereiche ein Nutzer häufig besucht, umfassen,
für jeden Nutzer, auf der Grundlage der spezifischen Kontextinformationen des Nutzers, Auswählen eines Satzes von drahtlosen Zugangsknoten aus der Vielzahl von drahtlosen Zugangsknoten, die in der Lage sind, die Traffic-Anforderungen des Nutzers zu befriedigen, und
Einschalten der drahtlosen Zugangsknoten des ausgewählten Satzes von drahtlosen Zugangsknoten.

2. Verfahren nach Anspruch 1, wobei die Identität eines Nutzers gegenüber der Verwaltungseinheit aufgedeckt wird, indem das mobile Endgerät des Nutzers authentifiziert wird, insbesondere wenn der Nutzer das Gebäude betritt.

3. Verfahren nach Anspruch 1 oder 2, wobei die Verwaltungseinheit auf der Basis der nutzerspezifischen Kontextinformationen Bewegungen eines Nutzers vorhersagt.

4. Verfahren nach Anspruch 3, wobei alle drahtlosen Zugangsknoten entlang eines vorhergesagten Nutzerpfades zum Einschalten ausgewählt werden.

5. Verfahren nach Anspruch 3 oder 4, wobei die Verwaltungseinheit einen Optimierungsprozess ausführt, um die Anzahl der eingeschalteten drahtlosen Zugriffsknoten zu minimieren, indem keine drahtlosen Zugriffsknoten eingeschaltet werden, die in Bezug auf eine Abdeckung des vorhergesagten Nutzerpfades keinen Beitrag leisten.

6. Verfahren nach einem der Ansprüche 1 bis 5, wobei die Verwaltungseinheit zur Erstellung von Korrelationen zwischen verschiedenen Nutzern historische Informationen analysiert.

7. Verfahren nach einem der Ansprüche 1 bis 6, wobei nutzerspezifische Kontextinformationen mit Informationen angereichert werden, die durch Analysieren des elektronischen Kalenders eines Nutzers erhalten werden.

8. Verfahren nach einem der Ansprüche 1 bis 7, wobei die Verwaltungseinheit drahtlose Zugangsknoten identifiziert, die zu drahtlosen Zugangsknoten des ausgewählten Satzes von drahtlosen Zugangsknoten benachbart sind, und diese identifizierten drahtlosen Zugangsknoten in einem Zustand hält, der ein schnelles Einschalten ermöglicht.

9. Verfahren nach einem der Ansprüche 1 bis 8, wobei der Verwaltungseinheit Informationen bezüglich des Energieverbrauchs der drahtlosen Zugangsknoten bei unterschiedlichen Ausgangsleistungseinstellungen zur Verfügung gestellt werden,
wobei die Verwaltungseinheit den gesamten Energieverbrauch von unterschiedlichen Konfigurationen berechnen kann und die Konfiguration, die in Bezug auf den Energieverbrauch kostengünstiger ist, anwenden kann.

10. Verfahren nach einem der Ansprüche 1 bis 9, wobei der Verwaltungseinheit Informationen zu den erforderlichen Operationen zur Verfügung gestellt werden, die einen drahtlosen Zugangsknoten aus einem Energiesparmodus in den Vollbetriebsmodus bringen.

11. Verfahren nach einem der Ansprüche 1 bis 10, wobei, wenn alle Nutzer das Unternehmensgebäude verlassen haben, alle drahtlosen Zugangsknoten mit Ausnahme eines drahtlosen Zugangsknotens, der sich im Eingangsbereich des Gebäudes befindet, in einen Energiesparmodus versetzt werden, und/oder
wobei alle drahtlosen Zugangsknoten in einen eingeschalteten Modus versetzt werden, falls einer der Nutzer innerhalb des Unternehmensgebäudes einen Notruf initiiert oder das Gebäude mit einem laufenden aktiven Notruf betritt.

12. System zur Verwaltung des Energieverbrauchs eines drahtlosen Unternehmenszugangsnetzwerks, insbesondere zur Durchführung eines Verfahrens nach einem der Ansprüche 1 bis 11,
wobei das Netzwerk eine Vielzahl von drahtlosen Zugangsknoten umfasst, die innerhalb des Unternehmensgebäudes verteilt sind, und wobei die drahtlosen Zugangsknoten, jeweils innerhalb eines bestimmten Abdeckungsbereichs, Nutzern Netzwerkzugang bereitstellen,
wobei das System aufweist:
eine Verwaltungseinheit,
Mittel, um der Verwaltungseinheit die Identität von Nutzern innerhalb des Gebäudes zu offenbaren, und
eine Datenbank, die basierend auf der Identität der Nutzer, nutzerspezifische Kontextinformationen bereitstellt, wobei die nutzerspezifischen Kontextinformationen Informationen über beobachtete Nutzeraktivität in Form von nutzerspezifischen Lastaktivitätsprofilen, Informationen über beobachtete Nutzermobilität innerhalb des Gebäudes in Form von nutzerspezifischen Mobilitätsprofilen einschließlich Ankommens- und/oder Gehens-Zeiten, und Informationen darüber, welches Büro zu einem Nutzer gehört, zu welchen Gebäudebereichen ein Nutzer Zugang hat, und/oder welche Gebäudebereiche ein Nutzer häufig besucht, umfassen,
wobei die Verwaltungseinheit so konfiguriert ist, dass sie für jeden Nutzer, auf der Grundlage der spezifischen Kontextinformationen des Nutzers, einen Satz von drahtlosen Zugangsknoten aus der Vielzahl von drahtlosen Zugangsknoten auswählt, die in der Lage sind, die Traffic-Anforderungen des Nutzers zu befriedigen, und dass sie die drahtlosen Zugangsknoten des ausgewählten Satzes von drahtlosen Zugangsknoten einschaltet.

13. System nach Anspruch 12, umfassend ein Zugangskontrolle-Element, das der Verwaltungseinheit nutzerspezifische Kontextinformation bereitstellt.

14. System nach Anspruch 12 oder 13, umfassend ein Gebäudeinventar-Element, das der Verwaltungseinheit Informationen bezüglich der Aufstellung und/oder Verfügbarkeit von drahtlosen Zugangsknoten innerhalb des Gebäudes bereitstellt, vorzugsweise zusammen mit Informationen über die spezifischen Eigenschaften der drahtlosen Zugangsknoten.

15. System nach einem der Ansprüche 12 bis 14, wobei die Verwaltungseinheit mit den elektronischen Kalendern der Nutzer verbunden ist, und/oder
wobei das Netzwerk als drahtlose Netzwerktechnologie 3G, LTE, LTE-A, WiFi oder WiMAX verwendet, und/oder
wobei die drahtlosen Zugangsknoten Femtozellen-Basisstationen umfassen.

## Revendications

1. Procédé de gestion de la consommation d'énergie d'un réseau d'accès sans fil d'entreprise,
dans lequel ledit réseau inclut une pluralité de noeuds d'accès sans fil qui sont répartis au sein du bâtiment de ladite entreprise et dans lequel lesdits noeuds d'accès sans fil, chacun au sein d'une zone de couverture donnée, fournissent un accès au réseau à des utilisateurs, le procédé comprenant les étapes ci-dessous consistant à :
révéler l'identité d'utilisateurs au sein dudit bâtiment à une entité de gestion ;
collecter des informations de contexte spécifiques aux utilisateurs sur la base de l'identité des utilisateurs, dans lequel lesdites informations de contexte spécifiques aux utilisateurs incluent des informations connexes à une activité d'utilisateurs surveillée sous la forme de profils d'activité de charge spécifiques aux utilisateurs, des informations connexes à une mobilité d'utilisateurs surveillée au sein dudit bâtiment, sous la forme de profils de mobilité spécifiques aux utilisateurs incluant des instants d'arrivée et/ou de départ, et des informations indiquant quel bureau appartient à un utilisateur, à quelles zones dudit bâtiment un utilisateur a accès, et/ou quelles zones dudit bâtiment sont fréquemment visitées par un utilisateur ;
pour chaque utilisateur, sur la base d'informations de contexte spécifiques audit utilisateur, sélectionner un ensemble de noeuds d'accès sans fil parmi ladite pluralité de noeuds d'accès sans fil qui sont en mesure de satisfaire les demandes de trafic dudit utilisateur ; et
mettre sous tension les noeuds d'accès sans fil dudit ensemble sélectionné de noeuds d'accès sans fil.

2. Procédé selon la revendication 1, dans lequel l'identité d'un utilisateur est révélée à ladite entité de gestion au moyen de l'authentification du terminal mobile de l'utilisateur, en particulier lorsque l'utilisateur pénètre dans ledit bâtiment.

3. Procédé selon la revendication 1 ou 2, dans lequel ladite entité de gestion, sur la base desdites informations de contexte spécifiques aux utilisateurs, prédit des déplacements d'un utilisateur.

4. Procédé selon la revendication 3, dans lequel tous les noeuds d'accès sans fil le long d'un chemin d'utilisateur prédit sont sélectionnés pour être mis sous tension.

5. Procédé selon la revendication 3 ou 4, dans lequel ladite entité de gestion exécute un processus d'optimisation en vue de minimiser le nombre de noeuds d'accès sans fil mis sous tension en ne mettant pas sous tension des noeuds d'accès sans fil qui ne contribuent pas en termes de couverture audit chemin d'utilisateur prédit.

6. Procédé selon l'une quelconque des revendications 1 à 5, dans lequel ladite entité de gestion analyse des informations d'historique permettant d'établir des corrélations entre différents utilisateurs.

7. Procédé selon l'une quelconque des revendications 1 à 6, dans lequel des informations de contexte spécifiques aux utilisateurs sont enrichies par des informations obtenues en analysant un agenda électronique de l'utilisateur.

8. Procédé selon l'une quelconque des revendications 1 à 7, dans lequel ladite entité de gestion identifie des noeuds d'accès sans fil qui sont au voisinage de noeuds d'accès sans fil dudit ensemble sélectionné de noeuds d'accès sans fil, et maintient ces noeuds d'accès sans fil identifiés dans un état qui permet une mise sous tension rapide.

9. Procédé selon l'une quelconque des revendications 1 à 8, dans lequel des informations concernant la consommation de puissance desdits noeuds d'accès sans fil utilisant différents paramètres de puissance de sortie sont fournies à ladite entité de gestion ;
dans lequel ladite entité de gestion peut calculer la consommation totale d'énergie de différentes configurations et peut appliquer la configuration qui est la plus rentable en termes de consommation de puissance.

10. Procédé selon l'une quelconque des revendications 1 à 9, dans lequel des informations concernant les opérations nécessaires pour amener un noeud d'accès sans fil d'un état écoénergétique à un mode pleinement opérationnel sont fournies à ladite entité de gestion.

11. Procédé selon l'une quelconque des revendications 1 à 10, dans lequel, lorsque tous les utilisateurs ont quitté ledit bâtiment d'entreprise, tous lesdits noeuds d'accès sans fil sont placés en mode écoénergétique, à l'exception d'un noeud d'accès sans fil situé dans la zone d'entrée dudit bâtiment ; et/ou
dans lequel tous lesdits noeuds d'accès sans fil sont placés en mode sous tension au cas où l'un quelconque desdits utilisateurs au sein dudit bâtiment d'entreprise initie un appel d'urgence ou pénètre dans le bâtiment avec un appel d'urgence actif en cours.

12. Système pour gérer la consommation d'énergie d'un réseau d'accès sans fil d'entreprise, en particulier pour mettre en oeuvre un procédé selon l'une quelconque des revendications 1 à 11 ;
dans lequel ledit réseau inclut une pluralité de noeuds d'accès sans fil qui sont répartis au sein du bâtiment de ladite entreprise et dans lequel lesdits noeuds d'accès sans fil, chacun au sein d'une zone de couverture donnée, fournissent un accès au réseau à des utilisateurs, ledit système comprenant :
une entité de gestion ;
un moyen pour révéler l'identité d'utilisateurs au sein dudit bâtiment à une entité de gestion ;
une base de données qui, sur la base de l'identité des utilisateurs, fournit des informations de contexte spécifiques aux utilisateurs, dans lequel lesdites informations de contexte spécifiques aux utilisateurs incluent des informations connexes à une activité d'utilisateurs surveillée, sous la forme de profils d'activité de charge spécifiques aux utilisateurs, des informations connexes à une mobilité d'utilisateurs surveillée au sein dudit bâtiment, sous la forme de profils de mobilité spécifiques aux utilisateurs incluant des instants d'arrivée et/ou de départ, et des informations indiquant quel bureau appartient à un utilisateur, à quelles zones dudit bâtiment un utilisateur a accès, et/ou quelles zones dudit bâtiment sont fréquemment visitées par un utilisateur ;
dans lequel ladite entité de gestion est configurée de manière à sélectionner, pour chaque utilisateur, sur la base d'informations de contexte spécifiques audit utilisateur, un ensemble de noeuds d'accès sans fil parmi ladite pluralité de noeuds d'accès sans fil qui sont en mesure de satisfaire les demandes de trafic dudit utilisateur, et à mettre sous tension les noeuds d'accès sans fil dudit ensemble sélectionné de noeuds d'accès sans fil.

13. Système selon la revendication 12, incluant un élément de commande d'accès physique destiné à fournir, à ladite entité de gestion, des informations de contexte spécifiques aux utilisateurs.

14. Système selon la revendication 12 ou 13, incluant un élément d'inventaire de bâtiment destiné à fournir, à ladite entité de gestion, des informations connexes au déploiement ou à la disponibilité de noeuds d'accès sans fil au sein dudit bâtiment, de préférence conjointement avec des informations connexes aux caractéristiques spécifiques desdits noeuds d'accès sans fil.

15. Système selon l'une quelconque des revendications 12 à 14, dans lequel ladite entité de gestion est connectée aux agendas électroniques des utilisateurs ; et/ou
dans lequel ledit réseau emploie, en tant que technologie de réseau sans fil, la technologie 3G, LTE, LTE-A, WiFi ou WiMAX ; et/ou
dans lequel lesdits noeuds d'accès sans fil incluent des stations de base à femtocellules.
